# EUROPEAN PATENT APPLICATION

(11) **EP 4 329 015 A1**
(43) Date of publication of application: **28.02.2024**
(21) Application number: 22941866.0
(22) Date of filing: 31.05.2022
(51) Int. Cl.: H01M 4/62, H01M 4/13, H01M 10/0525

(54) **BINDER, PREPARATION METHOD, SECONDARY BATTERY, BATTERY MODULE, BATTERY PACK, AND ELECTRIC APPARATUS**

(71) Applicant: Contemporary Amperex Technology Co., Limited, Ningde, Fujian 352100 (CN)
(72) Inventor: LI, Cheng, Ningde, Fujian 352100 (CN); LIU, Huihui, Ningde, Fujian 352100 (CN); DUAN, Lianwei, Ningde, Fujian 352100 (CN)
(74) Representative: Gong, Jinping
(86) International application number: PCT/CN2022/096489
(87) International publication number: WO 2023/230931

(57) **Abstract**

The present application provides a binder, a preparation method therefor, a secondary battery, a battery module, a battery pack, and a power consuming device. The binder comprises a polymer comprising structural units derived from a monomer represented by formula I and structural units derived from a monomer represented by formula II, wherein R₁ and R₂ are each independently selected from hydrogen or substituted or unsubstituted C₁₋₅ alkyl, R₃ is selected from hydrogen or methyl, and R₄ is selected from substituted or unsubstituted C₁₋₉ alkyl. The binder can be coated on the surface of the positive electrode active material, which is beneficial to maintain the structural integrity of the positive electrode active material during the cycling of the positive electrode plate, thereby improving the cycling performance of the battery. Moreover, the binder can produce a stronger binding effect, which allows the electrode plate to have a greater binding force and can reduce the internal resistance of the electrode plate.

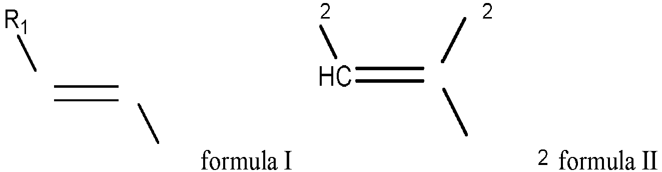

## Description

### Technical Field

The present application relates to the technical field of lithium batteries, and in particular to a binder, a preparation method therefor, a secondary battery, a battery module, a battery pack, and a power consuming device.

### Background Art

In recent years, lithium-ion batteries have been widely used in energy storage power systems such as hydroelectric, thermal, wind and solar power plants, as well as electric tools, electric bicycles, electric motorcycles, electric vehicles, military equipment, aerospace and other fields. With the popularization of application of lithium-ion batteries, higher requirements are put forward for their cycling performance and cost.

Binder is a common material in lithium-ion batteries, and is widely used in the electrode plates, separators, packaging sites of the battery. However, the conventional binder has high production costs, insufficient production capacity, and poor binding force, it can not effectively protect the electrode active material during the cycling of the battery, resulting in a decrease in the cycling performance of the battery, and it is difficult to meet the market requirements on the battery in terms of cost and endurance. Therefore, the existing binder still needs to be improved.

### Summary of the Invention

The present application is made in view of the above problem, and aims to provide a binder and a positive electrode plate containing the binder, so as to improve the binding force of the electrode plate and reduce the resistance of the electrode plate, thereby improving the cycling performance of the battery.

A first aspect of the present application provides a binder comprising a polymer comprising structural units derived from a monomer represented by formula I and structural units derived from a monomer represented by formula II, 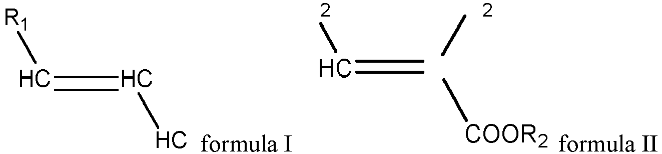 wherein R₁ and R₂ are each independently selected from hydrogen or substituted or unsubstituted C₁₋₅ alkyl, R₃ is selected from hydrogen or methyl, and R₄ is selected from substituted or unsubstituted C₁₋₉ alkyl.

The binder can be coated on the surface of the positive electrode active material because of its functional group with high adsorption energy, during the cycling of the positive electrode plate, the binder acts as a barrier layer and a protective layer for the positive electrode active material in the electrode plate, which isolates the direct contact between the positive electrode active material and the electrolyte solution in the battery, is beneficial to maintain the structural integrity of the positive electrode active material, and thereby improving the cycling performance of the battery. Moreover, the binder can produce a stronger binding effect, which allows the electrode plate to have a greater binding force and can reduce the internal resistance of the electrode plate.

In any embodiment, the molar content of the structural units derived from the monomer represented by formula I in the polymer is 60%-80%, and the molar content of the structural units derived from the monomer represented by formula II is 20%-40%, based on the total number of moles of all structural units in the polymer.

By ontrolling the molar content of the structural units derived from the monomer represented by formula I in the polymer and the molar content of the structural units derived from the monomer represented by formula II in the polymer, the electrode plate with the polymer as the binder is allowed to have an appropriate binding force and resistance, and thereby further improving the cycling performance.

In any embodiment, the polymer has a weight average molecular weight of 700,000 to 1,000,000. By controlling the weight average molecular weight of the polymer, the viscosity of the polymer can be ensured, which enables the electrode plate with the polymer as the binder to have an appropriate binding force and resistance, and thereby further improving the cycling performance.

In any embodiment, the polymer is prepared as a solution with a solid content of 7% in N-methylpyrrolidone (NMP) solvent, and the viscosity of the solution is 4500-7500 mPa·s when measured at 25°C. By controlling the viscosity of the polymer in an appropriate range, both the binding performance and processability of the binder can be taken into account, which enables the electrode plate with the polymer as the binder to have an appropriate binding force and resistance, and thereby further improving the cycling performance.

In any embodiment, the monomer represented by formula I is selected from one or more of acrylonitrile and butenenitrile.

In any embodiment, the monomer represented by formula II is selected from one or more of methyl acrylate, ethyl acrylate, butyl acrylate, isopentyl acrylate, isooctyl acrylate, methyl methacrylate, ethyl methacrylate, hydroxyethyl acrylate, and hydroxypropyl acrylate, or from one or more of methyl acrylate, butyl acrylate, and isooctyl acrylate.

The above raw materials are simple and easily available, and compared with conventional binders, the production cost can be greatly reduced and the production can be improved.

A second aspect of the present application provides a method for preparing a binder, comprising the steps of:
providing a monomer represented by formula I and a monomer represented by formula II, 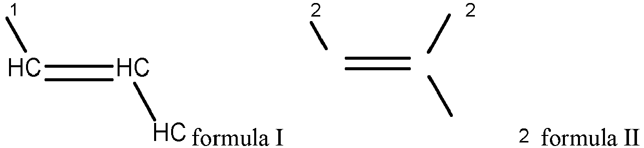 wherein R₁ and R₂ are each independently selected from hydrogen or substituted or unsubstituted C₁₋₅ alkyl, R₃ is selected from hydrogen or methyl, and R₄ is selected from substituted or unsubstituted C₁₋₉ alkyl;
polymerizing the monomer represented by formula I and the monomer represented by formula II under polymerizable conditions to prepare a polymer.

The preparation method involves raw materials of low cost, has no pollution to the environment, and is beneficial to improve the production of the binder. Moreover, the binder prepared by the method has a good coating effect on the active material, which can avoid the direct contact between the electrode active material and the electrolyte solution, thereby improving the performance of the battery.

A third aspect of the present application provides a positive electrode plate, comprising a positive electrode active material, a conductive agent, and a binder of any of the embodiments or a binder prepared by the preparation method of any of the embodiments.

The positive electrode plate has higher binding force and lower resistance, which can reduce the increase ratio of internal resistance of the battery during cycling, thereby improving the cycling capacity retention rate of the battery.

In any embodiment, the positive electrode active material is a lithium-containing transition metal oxide.

In any embodiment, the mass ratio of the binder to the positive electrode active material is 0.01 : 100-6 : 100, or 0.2 : 100-3 : 100, or 0.8 : 100-2 : 100.

An appropriate amount of binder can ensure that the binder can be just coated on the surface of the positive electrode active material, which effectively avoid the direct contact between the positive electrode active material and the electrolyte solution, thereby reducing the occurrence of side reactions. At the same time, the appropriate amount of binder can maintain a certain liquid absorption capacity, which effectively maintain the rebound of the electrode plate during cycling, and inhibit the increase of the direct current impedance of the electrode during long cycling; The appropriate amount of binder can also effectively stabilize the atoms such as Mn, Co and O in the positive electrode active material, and prevent the transition metal ions from migrating to the negative electrode, thereby reducing the decomposition of the SEI film by transition metal manganese, improving the capacity retention rate of the battery with the positive electrode plate prepared by the binder, and reducing the impedance of the battery.

In any embodiment, the conductive agent is selected from one or more of conductive carbon black, conductive graphite, carbon nanotubes, graphene, and carbon fibers, or from one or more of conductive carbon black and carbon nanotubes.

In any embodiment, the mass ratio of the binder to the conductive agent is 0.1 : 2-3 : 2, or 0.2 : 2-2.8 : 2, or 0.5 : 2-2.5 : 2.

An appropriate amount of binder can effectively connect the conductive agent and the positive electrode active material to form a conductive network, which increases the electron transport rate between the active materials, and maintains the integrity of the conductive network during the cycling of the battery, thereby reducing the resistance of the electrode plate and improving the cycling performance of the battery.

A fourth aspect of the present application provides a secondary battery, comprising an electrode assembly and an electrolyte solution, wherein the electrode assembly comprises the positive electrode plate of the third aspect of the present application, a separator and a negative electrode plate.

A fifth aspect of the present application provides a battery module, comprising the secondary battery of the fourth aspect of the present application.

A sixth aspect of the present application provides a battery pack, comprising the battery module of the fifth aspect of the present application.

A seventh aspect of the present application provides a power consuming device, comprising at least one of the secondary battery of the fourth aspect of the present application, the battery module of the fifth aspect of the present application, or the battery pack of the sixth aspect of the present application.

### Brief Description of the Drawings

FIG. 1 is a schematic diagram of a positive electrode plate with a polyvinylidene fluoride (PVDF) as a binder before and after cycling.
FIG. 2 is a schematic diagram of a positive electrode plate comprising a binder according to an embodiment of the present application before and after cycling.
FIG. 3 is a schematic diagram of a secondary battery according to an embodiment of the present application.
FIG. 4 is an exploded view of a secondary battery according to an embodiment of the present application as shown in FIG. 3.
FIG. 5 is a schematic diagram of a battery module according to an embodiment of the present application.
FIG. 6 is a schematic diagram of a battery pack according to an embodiment of the present application.
FIG. 7 is an exploded view of a battery pack according to an embodiment of the present application as shown in FIG. 6.
FIG. 8 is a schematic diagram of a power consuming device using a secondary battery according to an embodiment of the present application as a power source.

### List of reference numerals:

1 - battery pack; 2 - upper box body; 3 - lower box body; 4 - battery module; 5 - secondary battery; 51 - housing; 52 - electrode assembly; 53 - top cover assembly; 6 - positive electrode plate with PVDF as a binder; 61 - current collector; 62 - positive electrode active material; 63 - PVDF; 64 - conductive agent; 65 - positive electrode film layer; 66 - binder of any embodiment of the present application, 7 - positive electrode plate using the binder of any embodiment of the present application.

### Detailed Description of Embodiments

Hereafter, embodiments of the binder, the preparation method therefor, the electrode, the battery and the power consuming device of the present application are specifically disclosed with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application may be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Polyvinylidene fluoride (PVDF) is one of the most commonly used binders in the lithium-ion battery industry. However, R142b, the main raw material for the synthesis of monomer vinylidene fluoride of the PVDF, belongs to the second-generation refrigerant, which will destroy the ozone layer when used on a large scale, so strict quota system for environmental reasons is not conducive to large-scale production. The raw material of R142b is calcium carbide, which belongs to hazardous chemicals, and has the risk of explosion when exposed to water; in addition, in recent years, the annual production capacity has been continuously reduced, resulting in a shortage of supply. The above limitations result in a expensive cost, which is not conducive to reducing the production cost of the battery.

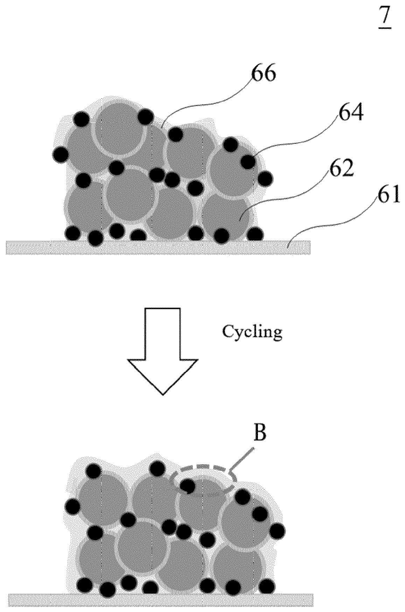

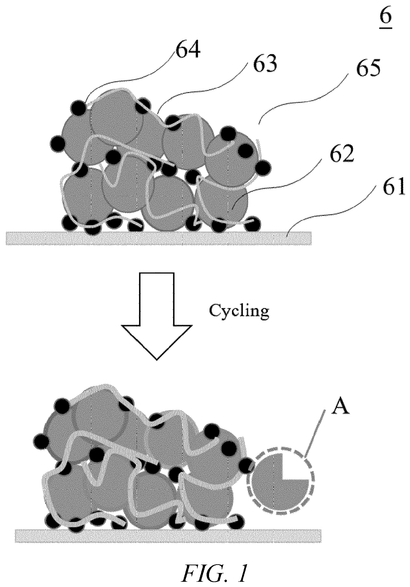

Moreover, polyvinylidene fluoride can not be effectively coated on the active material in the electrode plate during the cycling of the battery, which results in the electrode active material to be easily contacted with the electrolyte solution directly, thereby reducing the cycling performance of the battery. FIG. 1 is a schematic diagram of a positive electrode plate 6 with PVDF as a binder 63 before and after cycling. The positive electrode plate 6 comprises a current collector 61 and a positive electrode film layer 65 provided on at least one surface of the current collector 61, the positive electrode film layer 65 comprising a positive electrode active material 62, PVDF 63, and a conductive agent 64. During the cycling of the positive electrode plate 6, the electrolyte in the electrolyte solution will be decomposed to produce water and highly corrosive hydrofluoric acid, since PVDF 63 can not effectively coat the positive electrode active material 62, the positive electrode active material 62 will directly contact with the electrolytic solution, which causes the consumption of the electrolyte solution and corrosion of the positive electrode active material 62, resulting in the collapse of the structure thereof, as shown at A site in FIG. 1. The collapse of the structure of the positive electrode active material makes it easier for the transition metal in the positive electrode active material to dissolve out to form ions, resulting in a decrease of the performance of the battery. For example, the crystal structure of lithium cobalt oxide and lithium nickel cobalt manganese oxide, which are the positive electrode active materials, is prone to be destroyed during cycling, resulting in the dissolution of Co²⁺ and the loss of capacity during cycling; The positive electrode active material of lithium manganese oxide is prone to be corroded by the electrolyte solution to produce Mn²⁺, and Mn²⁺ is prone to migrate to the surface of the negative electrode to be reduced to metal Mn, which is prone to catalyze the decomposition of the SEI film and consume active lithium, resulting in continuous deterioration of electrical properties.

### [Binder]

Based on this, the present application proposes a binder comprising a polymer comprising structural units derived from a monomer represented by formula I and structural units derived from a monomer represented by formula II, 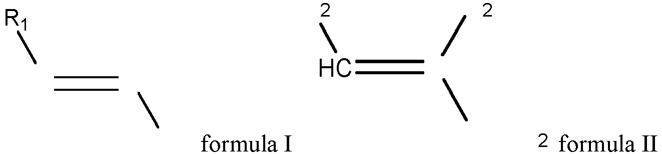 wherein R₁ and R₂ are each independently selected from hydrogen or substituted or unsubstituted C₁₋₅ alkyl, R₃ is selected from hydrogen or methyl, and R₄ is selected from substituted or unsubstituted C₁₋₉ alkyl.

Herein, the term "binder" means a chemical compound, polymer or mixture that forms a colloidal solution or a colloidal dispersion in a dispersion medium.

Herein, the term "polymer" involves, on the one hand, the aggregate of macromolecules that are chemically homogeneous but are different in the degree of polymerization, molar mass and chain length, which is prepared by polymerization reaction. On the other hand, the term also involves the derivatives of such macromolecule aggregates formed by a polymerization reaction, namely, the compounds that can be obtained by the reaction (e.g., addition or substitution) of the functional groups in the above macromolecules and may be chemically homogeneous or chemically heterogeneous.

In some embodiments, the dispersion medium of the binder is an aqueous solvent, such as water. That is, the binder is dissolved in the aqueous solvent.

In some embodiments, the dispersion medium of the binder is an oily solvent, examples of the oily solvent include, but are not limited to, dimethylacetamide, N,N-dimethylformamide, N-methylpyrrolidone, acetone, dimethyl carbonate, ethyl cellulose, and polycarbonate. That is, the binder is dissolved in the oily solvent.

In some embodiments, the binder is used to hold an electrode material and/or a conductive agent in an appropriate place and adhere them to a conductive metal component to form an electrode.

In some embodiments, the binder is used as a positive electrode binder for binding a positive electrode active material and/or a conductive agent to form an electrode.

In some embodiments, the binder is used as a negative electrode binder for binding a negative electrode active material and/or a conductive agent to form an electrode.

Herein, the term "C₁₋₅ alkyl" means a linear or branched hydrocarbon chain group only consisting of carbon and hydrogen atoms, in which there is no unsaturation, having from one to five carbon atoms, and attached to the rest of the molecule via a single bond. The term "C₁₋₉ alkyl" should be interpreted accordingly. Examples of C₁₋₅ alkyl include, but are not limited to: methyl, ethyl, n-propyl, 1-methylethyl (isopropyl), butyl, and pentyl.

As used herein, the term "substituted" means that at least one hydrogen atom of the compound or chemical moiety is substituted by another chemical moiety with a substituent, in which each substituent is independently selected from: hydroxyl, sulfydryl, amino, cyano, nitro, aldehyde, halogen atom, alkenyl, alkynyl, aryl, heteroaryl, C₁₋₆ alkyl, and C₁₋₆ alkoxy.

As used herein, the term "methyl" refers to a -CH₃ group.

As used herein, the term "cyano" refers to a -CN group.

As used herein, the term "ester group" refers to a -COOR₄ group, and R₄ is selected from C₁₋₉ alkyl which is substituted with a substituent or unsubstituted.

In some embodiments, the polymer comprises one or more structural units derived from a monomer represented by formula I. In some embodiments, the polymer comprises one or more structural units derived from a monomer represented by formula II. In some embodiments, the polymers include, but are not limited to, an acrylonitrile-methyl acrylate polymer, an acrylonitrile-2-methyl methacrylate polymer, an acrylonitrile-2-ethyl methacrylate polymer, an acrylonitrile- ethyl acrylate polymer, an acrylonitrile-butyl acrylate polymer, an acrylonitrile-isooctyl acrylate polymer, an acrylonitrile-butyl acrylate-hydroxyethyl acrylate polymer, an acrylonitrile-butyl acrylate-ethyl acrylate polymer, an acrylonitrile-isoamyl acrylate-hydroxypropyl acrylate polymer, an acrylonitrile-butyl acrylate-isooctyl acrylate-methyl methacrylate polymer, and an acrylonitrile-butyl acrylate-isooctyl acrylate-ethyl methacrylate polymer.

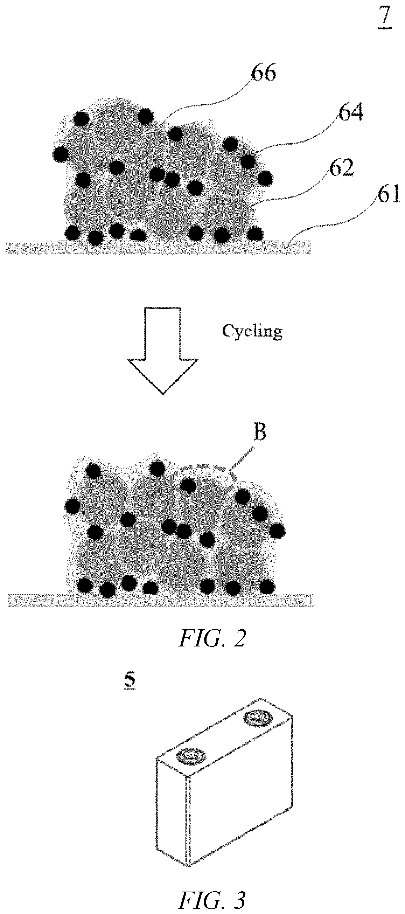

FIG. 2 is a schematic diagram of the positive electrode plate 7 using the binder 66 of any embodiment of the present application before and after cycling. As shown in FIG. 2, unlike the PVDF 63 in FIG. 1, the binder 66 of any embodiment of the present application can be coated on the surface of the positive electrode active material 62 due to functional groups with higher adsorption energy. As shown in area B in FIG. 2, during the cycling of the positive electrode plate 7, the binder 66 acts as a barrier layer and a protective layer, which isolates the direct contact between the positive electrode active material 62 and the electrolyte solution in the battery, is beneficial to maintain the structural integrity of the positive electrode active material 62, and thereby improving the cycling performance of the battery.

Firstly, the binder is equivalent to a barrier layer provided on the surface of the positive electrode active material, and the coating of the binder can effectively prevent the transition metal ions generated by the positive electrode active material from directly diffusing into the electrolyte solution. The cyano functional groups in the binder have a large adsorption energy, which enables the binder to be stably adsorbed on the surfaces of the positive electrode active materials such as lithium manganese oxide, lithium cobalt oxide and lithium nickel cobalt manganese oxide through molecular adsorption. Moreover, the cyano groups in the binder can complex with the transition metal to stabilize the Co, Mn, and O elements on the surface of the active material, change the surface activity of the positive electrode plate, and prevent the transition metal ions produced by the positive electrode active material from directly diffusing into the electrolyte solution.

Secondly, the binder is equivalent to a protective layer provided on the surface of the positive electrode active material, and the coating of the binder can effectively prevent the positive electrode active material from being in direct contact with the electrolyte solution containing hydrofluoric acid, and significantly slow down the decomposition of the active material by the hydrofluoric acid and the decomposition of electrolyte solution molecules on the surface of the positive electrode active materials under high voltage conditions, thereby reducing the generation of transition metal ions in the battery system. With the adsorption of the binder on the surface of the positive electrode active material, the number of bonds between the binder and the positive electrode active material increases, and the adsorption energy increases, which reduces the adsorption of the molecules (ethylene carbonate EC or propylene carbonate PC) in the electrolyte solution on the surface of the positive electrode active material, and reduces the probability and degree of side reactions, thereby avoiding the structural collapse of the positive electrode active material due to corrosion by the electrolyte solution during cycling and generating more transition metal ions.

Furthermore, the binder can produce a stronger binding effect, which allows the electrode plate to have a greater binding force and can improve the processability of the electrode plate. Since there are abundant polar groups in the polymer, such as cyano group located on the main chain segment of the molecular chain, the binding force of the binder to the positive electrode active material can be improved through the dipole interaction between the cyano group and the active material. For example, the ester group on the binder can form a stronger hydrogen bond with the hydroxyl group in the oxide layer on the surface of the current collector to ensure that the active material is firmly attached to the current collector, thereby improving the binding force of the electrode plate and avoiding processing abnormalities such as film peeling and powder dropping during coating or cold pressing of the electrode plate.

Moreover, the binder has an ester group, which can also play a role in softening the binder. At the same time, the swelling of the ester group is greater than that of the conventional binder PVDF, which has a certain ability to absorb and retain the electrolyte solution, and can improve the problem of poor ionic conductivity of the binder.

In addition, the use of the binder in the electrode can effectively improve the problem with regard to gas production during storage of the battery under high temperature conditions, slow down the generation of transition metals and their catalytic decomposition of the SEI film during the storage or use of the battery, thereby improving the long cycle life of the battery and reducing the increase of the impedance.

In summary, the binder can be coated on the surface of the positive electrode active material because of its functional group with high adsorption energy, during the cycling of the positive electrode plate, the binder acts as a barrier layer and a protective layer for the positive electrode active material in the electrode plate, which isolates the direct contact between the positive electrode active material and the electrolyte solution in the battery, is beneficial to maintain the structural integrity of the positive electrode active material, and thereby improving the cycling performance of the battery. Moreover, the binder can produce a stronger binding effect, which allows the electrode plate to have a greater binding force and can reduce the internal resistance of the electrode plate.

In some embodiments, the molar content of the structural units derived from the monomer represented by formula I in the polymer is 60%-80%, and the molar content of the structural units derived from the monomer represented by formula II is 20%-40%, based on the total number of moles of all structural units in the polymer.

By ontrolling the molar content of the structural units derived from the monomer represented by formula I in the polymer and the molar content of the structural units derived from the monomer represented by formula II in the polymer, the electrode plate with the polymer as the binder is allowed to have an appropriate binding force and resistance, and thereby further improving the cycling performance.

In some embodiments, the polymer has a weight average molecular weight of 700,000-1,000,000.

Herein, the term "weight average molecular weight" means the statistical average molecular weight averaged by molecular weights of different molecular weights in a polymer.

By controlling the weight average molecular weight of the polymer, the viscosity of the polymer can be ensured, which enables the electrode plate with the polymer as the binder to have an appropriate binding force and resistance, and thereby further improving the cycling performance.

In some embodiments, the polymer is prepared as a solution with a solid content of 7% in N-methylpyrrolidone (NMP) solvent, and the viscosity of the solution is 4500-7500 mPa·s when measured at 25°C.

By controlling the viscosity of the polymer in an appropriate range, both the binding performance and processability of the binder can be taken into account, which enables the electrode plate with the polymer as the binder to have an appropriate binding force and resistance, and thereby further improving the cycling performance.

In some embodiments, the polymer has an average particle size D50 of 5-30 µm.

As used herein, the term "D50" refers to a particle size corresponding to a cumulative particle size distribution percentage of a sample reaching 50%. Its physical meaning is that the particles with a particle size greater than it account for 50%, and the particles with a particle size less than it also account for 50%. D50 is also called the median size or median particle size.

Appropriate average particle size D50 of the particles helps to improve the dissolution rate of the polymer in the solvent and improve the processing efficiency of the electrode plate.

In some embodiments, the polymer has a density of 1.1-1.3 g/cm³.

As used herein, the term "density" means that density is a measure of mass within a specific volume, and density is equal to the mass of an object divided by its volume.

The density of the polymer is lower than that of PVDF, which helps the electrode further increase the loading capacity of the active material.

In some embodiments, the monomer represented by formula I is selected from one or more of acrylonitrile and butenenitrile.

In some embodiments, the monomer represented by formula II is selected from one or more of methyl acrylate, ethyl acrylate, butyl acrylate, isoamyl acrylate, isooctyl acrylate, methyl methacrylate, ethyl methacrylate, hydroxyethyl acrylate, and hydroxypropyl acrylate, or one or more of methyl acrylate, butyl acrylate, and isooctyl acrylate.

The above raw materials are simple and easily available, and compared with conventional binders, the production cost can be greatly reduced and the production can be improved.

In an embodiment of the present application, provided is a method for preparing a binder, comprising the steps of:
providing a monomer represented by formula I and a monomer represented by formula II, 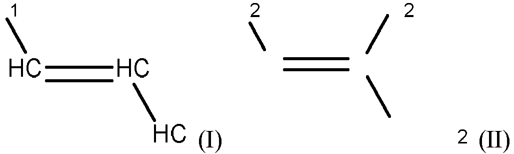 wherein R₁ and R₂ are each independently selected from hydrogen or C₁₋₅ alkyl substituted or unsubstituted by a substituent, R₃ is selected from hydrogen or methyl, and R₄ is selected from C₁₋₉ alkyl substituted or unsubstituted by a substituent; and
polymerizing the monomer represented by formula I and the monomer represented by formula II under polymerizable conditions to prepare a polymer.

As used herein, the term "polymerizable conditions" refers to those conditions comprising temperature, pressure, reactant concentrations, optional solvent/diluent, reactant mixing/addition parameters selected by those skilled in the art, and other conditions facilitating reaction of one or more monomers react in at least one polymerization reactor.

The method involves raw materials of low cost, has no pollution to the environment, and is beneficial to improve the production of the binder.

In some embodiments, the preparation method of the binder is capable of producing the binder of any embodiment of the present application.

The binder prepared by the preparation method has a good coating property on the active material, and can avoid direct contact between the active material and the electrolyte solution, thereby improving the battery performance.

### [Positive electrode plate]

In an embodiment of the present application, provided is a positive electrode plate, comprising a positive electrode active material, a conductive agent, and a binder of any of the embodiments or a binder prepared by the preparation method of any of the embodiments.

The positive electrode plate has higher binding force and lower resistance, which can reduce the increase ratio of internal resistance of the battery during cycling, thereby improving the cycling capacity retention rate of the battery.

In some embodiments, the positive electrode active material is a lithium-containing transition metal oxide, which can be selected from lithium cobalt oxide, lithium nickel manganese oxide, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, lithium titanate, or doped modified materials thereof, or at least one of conductive carbon-coated modified materials, conductive metal-coated modified materials, or conductive polymer-coated modified materials thereof.

In some embodiments, the mass ratio of the binder to the positive electrode active material is 0.01 : 100-6 : 100, or 0.2 : 100-3 : 100, or 0.8 : 100-2 : 100. In some embodiments, the mass ratio of the binder to the positive electrode active material is 0.3 : 100-2 : 100, or 0.5 : 100-2 : 100, or 0.6 : 100-2 : 100, or 0.7 : 100-2 : 100, or 0.8 : 100-2 : 100, or 0.9 : 100-2 : 100, or 1.0 : 100-2 : 100, or 1.1 : 100-2 : 100, or 1.2 : 100-2 : 100, or 1.3 : 100-2 : 100, or 1.4 : 100-2 : 100, or 1.5 : 100-2 : 100, or 1.6 : 100-2 : 100.

If the content of the binder is too low, the binder can not bind enough conductive agent and the positive electrode active material together, and the binding force of the electrode plate may be small and is prone to demolding during processing or the positive electrode active material may diffuse to the negative electrode during the long-term cycling of the battery, thereby causing a great safety risk. In addition, the binder cannot form a tight coating on the surface of the positive electrode active material, resulting in the reduction or even failure of the above beneficial effects of the binder.

On the contrary, if the content of the binder is too high, the coating layer of the positive electrode active material may be too thick, which hinders the transport of lithium ions between the active materials, making it difficult for the lithium ions to be released or intercalated, resulting in an increase in the resistance of the electrode plate and the impedance of the battery. At the same time, too much binder not only reduces the loading capacity of the positive electrode active material on the electrode, but also reduces the energy density of the battery, and increases the swelling rate of the electrode plate in the electrolyte solution, thereby increasing the direct current impedance of the battery.

An appropriate amount of binder can ensure that the binder can be just coated on the surface of the positive electrode active material, which effectively avoid the direct contact between the positive electrode active material and the electrolyte solution, thereby reducing the occurrence of side reactions. At the same time, the appropriate amount of binder can maintain a certain liquid absorption capacity, which effectively maintain the rebound of the electrode plate during cycling, and inhibit the increase of the direct current impedance during long cycling; The appropriate amount of binder can also effectively stabilize the atoms such as Mn, Co and O in the active material, and prevent the transition metal ions from migrating to the negative electrode, thereby reducing the decomposition of the SEI film by transition metal manganese, improving the capacity retention rate of the battery with the positive electrode plate prepared by the binder, and reducing the impedance of the battery.

In some embodiments, the conductive agent is selected from one or more of conductive carbon black, conductive graphite, carbon nanotubes, graphene, and carbon fibers, or is selected from one or more of conductive carbon black and carbon nanotubes.

The combination of the conductive agent and the binder of the present application helps to improve the conductivity of the diaphragm of the electrode plate and reduce the resistance.

In some embodiments, a mass ratio of the binder to the conductive agent is 0.1 : 2-3 : 2, or 0.2 : 2-2.8 : 2, or 0.5 : 2-2.5 : 2. In some embodiments, a mass ratio of the binder to the conductive agent is 0.1 : 2-2.5 : 2, or 0.1 : 2-2.3 : 2, or 0.1 : 2-2.1 : 2, or 0.2 : 2-2.5 : 2, or 0.3 : 2-2.5 : 2, or 0.4 : 2-2.5 : 2, or 0.5 : 2-2.5 : 2, or 0.6 : 2-2.5 : 2, or 0.7 : 2-2.5 : 2, or 0.8 : 2-2.5 : 2, or 0.9 : 2-2.5 : 2, or 1.0 : 2-2.5 : 2, or 1.1 : 2-2.5 : 2, or 1.2 : 2-2.5 : 2, or 1.3 : 2-2.5 : 2, or 1.4 : 2-2.5 : 2, or 1.5 : 2-2.5 : 2, or 1.6 : 2-2.5 : 2.

If the mass ratio of the binder to the conductive agent in the electrode plate is too low, the binder can not effectively bind the conductive agent and the positive electrode active material together, but also may lead to the accumulation of the conductive agent, and thereby the increase of resistance of the electrode plate; and it may cause problems such as sedimentation of the active material during the preparation of the slurry, resulting in uneven mass distribution of the slurry in the coating process of the electrode plate, thereby seriously affecting the consistency of the quality of the electrode plate and the cycling performance of the battery.

On the contrary, if the mass ratio of the binder and the conductive agent in the electrode plate is too high, the coating layer may be too thick, which can not provide an effective channel for electron transport, thereby reducing the electrical performance of the battery. At the same time, the coating of excessive binder on the surface of the positive electrode active material may lead to a decrease in the gram capacity of the positive electrode active material, which will also seriously affect the coulombic efficiency of the battery during cycling, that is, the specific discharge capacity and specific charge capacity may decrease. Furthermore, if the content of the binder is too high, the viscosity of the slurry may be too high during stirring.If the slurry needs to be stirred with high amount of solvent, the solid content of the slurry will be reduced and resources will be wasted. This not only prolongs the drying time required for the electrode plate and reduces production efficiency, but may also cause the binder to "float" when the electrode plate is dried at a high temperature for a long time, which affects the binding force between the active material and the current collector, and even leads to demoulding and the sharp decline of capacity of the battery.

An appropriate amount of binder can effectively connect the conductive agent and the positive electrode active material to form a conductive network, which increases the electron transport rate between the positive electrode active materials, and maintains the integrity of the conductive network during the cycling of the battery, thereby improving the cycling performance of the battery.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. LiCoO₂), lithium nickel oxide (e.g. LiNiO₂), lithium manganese oxide (e.g. LiMnO₂, LiMn₂O₄), lithium nickel cobalt oxide, lithium manganese cobalt oxide, lithium nickel manganese oxide, lithium nickel cobalt manganese oxide (e.g. LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), lithium nickel cobalt aluminum oxide (e.g. LiNi_{0.85}Co_{0.15}Al_{0.05}O₂), and modified compounds thereof, and the like. Examples of lithium-containing phosphates of olivine structure may include, but are not limited to, at least one of lithium iron phosphate (e.g. LiFePO₄ (also referred to as LFP)), lithium iron phosphate and carbon composites, lithium manganese phosphate (e.g. LiMnPO₄), lithium manganese phosphate and carbon composites, lithium manganese iron phosphate, and lithium manganese iron phosphate and carbon composites.

In some embodiments, the positive electrode plate can be prepared as follows: dispersing the above-mentioned components for preparing the positive electrode plate, such as a positive electrode active material, a conductive agent, a binder and any other components, in a solvent (e.g., N-methylpyrrolidone) to form a positive electrode slurry; and coating the positive electrode current collector with the positive electrode slurry, followed by the procedures such as drying and cold pressing, so as to obtain the positive electrode plate.

### [Negative electrode plate]

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites, and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. The binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, an electrolyte solution is used as the electrolyte. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high-temperature or low-temperature performance of the battery.

### [Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

### [Secondary battery]

In an embodiment of the present application, provided is a secondary battery, comprising an electrode assembly and an electrolyte solution, wherein the electrode assembly comprises the positive electrode plate of any embodiment, the separator, and the negative electrode plate.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

The shape of the secondary battery is not particularly limited in the present application and may be cylindrical, square or of any other shape. For example, FIG. 3 is a secondary battery 5 having a square structure as an example.

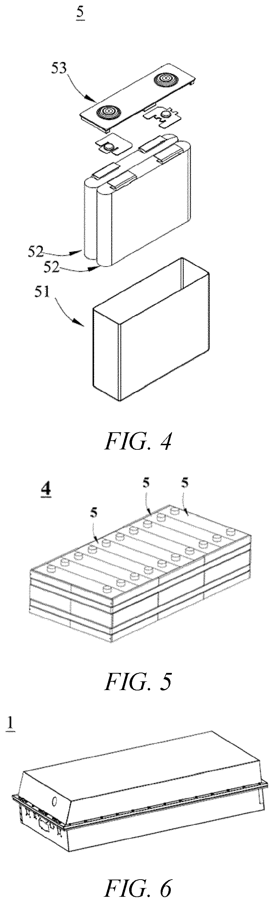

In some embodiments, referring to FIG. 4, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

### [Battery module]

In some embodiments, the secondary battery can be assembled into a battery module, and the number of the secondary batteries contained in the battery module may be one or more, and the specific number can be selected by those skilled in the art according to the application and capacity of the battery module.

FIG. 5 shows a battery module 4 as an example. Referring to FIG. 5, in the battery module 4, a plurality of secondary batteries 5 may be sequentially arranged in the length direction of the battery module 4. Apparently, the secondary batteries may also be arranged in any other manner. Furthermore, the plurality of secondary batteries 5 may be fixed by fasteners.

Optionally, the battery module 4 may further comprise an outer shell with an accommodating space, and the plurality of secondary batteries 5 are accommodated in the accommodating space.

### [Battery pack]

In some embodiments, the above battery module may also be assembled into a battery pack, the number of the battery modules contained in the battery pack may be one or more, and the specific number can be selected by those skilled in the art according to the application and capacity of the battery pack.

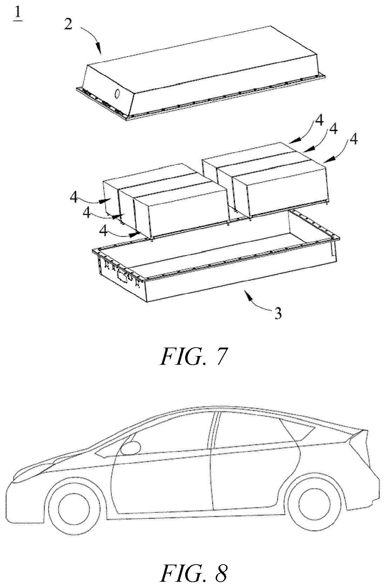

FIG. 6 and FIG. 7 show a battery pack 1 as an example. Referring to FIG. 4 and FIG. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. A plurality of battery modules 4 may be arranged in the battery box in any manner.

### [Power consuming device]

In an embodiment of the present application, provided is a power consuming device, comprising at least one of the secondary battery of any embodiment, the battery module of any embodiment, or the battery pack of any embodiment.

The power consuming device comprises at least one of the secondary battery, battery module or battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

FIG. 8 is a power consuming device as an example. The power consuming device may be a pure electric vehicle, a hybrid electric vehicle, or a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

### Examples

### Preparation method

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

### Example 1

### 1) Preparation of binder

The preparation method of the binder is as follows:
Acrylonitrile and methyl acrylate are weighed at a molar ratio of 8 : 2, and 340 ml of deionized water is added into a three-neck flask, flushed with nitrogen for 30 min and heated to 40°C; 328 mmol of acrylonitrile monomer, 82 mmol of methyl acrylate monomer and 0.2 g of chain transfer agent monomer dodecylthiol (2% of the total monomer solubility) is added, and then 10 ml of deionized water dissolved in 6 mmol of NaHSO₃ is added, followed by stirring for 5 min, and 50 ml of K₂S₂O₈ saturated solution is added, followed by reacting at 40°C for 3 h, filtering the product, washing with a large amount of deionized water, and drying in vacuum at 70°C to a constant weight to obtain a white powder.

### 2) Preparation of positive electrode plate

A positive electrode active material lithium of cobalt oxide (LCO), a conductive agent of carbon nanotubes, and the prepared binder are dissolved at a mass ratio of 200 : 2 : 1 in a solvent N-methylpyrrolidone (NMP), followed by stirring and uniformly mixing to obtain a positive electrode slurry; the positive electrode slurry is then coated onto a positive electrode current collector, followed by drying, cold pressing, and slitting to obtain a positive electrode plate.

### 3) Preparation of negative electrode plate

A active material of artificial graphite, a conductive agent of carbon black, a binder of styrene butadiene rubber (SBR) and a thickener of sodium carboxymethylcellulose (CMC) are dissolved at a weight ratio of 96.2 : 0.8 : 0.8 : 1.2 in a solvent of deionized water, followed by uniformly mixing to prepare a negative electrode slurry; the negative electrode slurry is uniformly coated onto a negative electrode current collector copper foil, followed by drying, cold pressing, and slitting to obtain a negative electrode plate. 4) Separator

A polypropylene film is used as a separator.

### 5) Preparation of electrolyte solution

In an argon atmosphere glove box (H₂O < 0.1 ppm and O₂ < 0.1 ppm), the organic solvents ethylene carbonate (EC)/ethyl methyl carbonate (EMC) are uniformly mixed at a volume ratio of 3/7, and a LiPF₆ lithium salt is dissolved in the organic solvents and uniformly stirred, and a 1 M EC/EMC solution containing LiPF₆ is prepared to obtain an electrolyte solution.

### 6) Preparation of battery

The positive electrode plate, the separator and the negative electrode plate of Example 1 are stacked in sequence, wherein the separator being positioned between the positive electrode plate and the negative electrode plate for isolation, and then are wound to obtain a bare cell, which is welded with tabs and put into an aluminum housing and then baked at 80°C for water removal, and the electrolyte solution is subsequently injected therein and sealed to obtain an uncharged battery. The uncharged battery is then successively subjected to procedures such as leaving to stand, hot and cold pressing, formation, shaping, and capacity tests to obtain a lithium-ion battery product of Example 1.

The preparation methods of the batteries of Examples 2-59 and the batteries of Comparative Examples 1-4 are similar to that of the battery of Example 1, but the raw materials for preparation of the binder, reaction time and the ratio of raw materials in the positive electrode plate are adjusted.

In Examples 2-4, the mass ratio of the binder to the positive electrode active material is adjusted, and other parameters are kept the same as those in Example 1. The specific parameters are shown in Table 1. In Examples 5-8, the mass ratio of the binder to the positive electrode active material is set as 1.3 : 100, the mass ratio of the binder to the conductive agent carbon nanotubes is adjusted, and other parameters are kept the same as those in Example 1. The specific parameters are shown in Table 1. In Examples 9-12, the ratio of acrylonitrile to methyl acrylate added in preparation process of the binder is adjusted, and other parameters are kept the same as those in Example 4. The specific parameters are shown in Table 1.

In Examples 13-16, acrylonitrile and butyl acrylate monomers are added and reacted at 50°C for 3 h to prepare a polymer as a binder. The preparation method is the same as that in Example 1, wherein the mass ratio of the binder to the positive electrode active material is adjusted, and other parameters are kept the same as those in Embodiment 1. The specific parameters are shown in Table 1. In Examples 17-20, the mass ratio of the binder to the positive electrode active material is as 1.3 : 100, the mass ratio of the binder to the conductive agent carbon nanotubes is adjusted, and other parameters are kept the same as those in Example 13. The specific parameters are shown in the table 1. In Example 21, an acrylonitrile-butyl acrylate polymer is prepared by adding acrylonitrile and butyl acrylate at a ratio of 6:4, and other parameters are kept the same as those in Example 14. The specific parameters are shown in Table 1.

In Examples 22-25, acrylonitrile and isooctyl acrylate monomers are added and reacted at 50°C for 3.5 h to prepare a polymer as a binder, and the mass ratio of the binder to the positive electrode active material is adjusted, and other parameters are kept the same as those in Example 1. The specific parameters are shown in Table 1. In Examples 26-29, the mass ratio of the binder to the positive electrode active material is as 1.3 : 100, the mass ratio of the binder to the conductive agent carbon nanotubes is adjusted, and other parameters are kept the same as those in Example 22. The specific parameters are shown in the table 1. In Example 30, an acrylonitrile-butyl acrylate polymer is prepared by adding acrylonitrile and butyl acrylate at a ratio of 6 : 4, and other parameters are kept the same as those in Example 25. The specific parameters are shown in Table 1.

In Examples 31-34, lithium nickel cobalt manganese oxide (NCM) is used as the positive electrode active material, and acrylonitrile and methyl acrylate monomers are reacted at 45°C for 4 h to prepare a polymer as a binder. The preparation method is the same as that in Example 1, wherein the mass ratio of the binder to the conductive agent carbon nanotubes is 1.5 : 2, the mass ratio of the binder to the positive electrode active material is adjusted, and other steps are the same as those in Example 1. The specific parameters are shown in Table 1. In Examples 35-38, the mass ratio of the binder to the positive electrode active material is as 1.6 : 100, the mass ratio of the binder to the conductive agent carbon nanotubes is adjusted, and other parameters are kept the same as those in Example 31. The specific parameters are shown in the table 1. In Example 39, an acrylonitrile-methyl acrylate polymer is prepared by adding acrylonitrile and methyl acrylate at a ratio of 6 : 4, and other parameters are kept the same as those in Example 35. The specific parameters are shown in Table 1.

In Examples 40-43, lithium nickel cobalt manganese oxide (NCM) is used as the positive electrode active material, and acrylonitrile and butyl acrylate monomers are added and reacted at 55°C for 4.5 h to prepare a polymer as a binder, wherein the ratio of acrylonitrile to butyl acrylate added is 8 : 2, and the mass ratio of the binder to the conductive agent carbon nanotubes is 1.5 : 2, the mass ratio of the binder to the positive electrode active material is adjusted, and other preparation methods are the same as those in Example 1. The specific parameters are shown in Table 1. In Examples 44-47, the mass ratio of the binder to the positive electrode active material is as 1.6 : 100, the mass ratio of the binder to the conductive agent carbon nanotubes is adjusted, and other parameters are kept the same as those in Example 40. The specific parameters are shown in the table 1. In Example 48, an acrylonitrile-butyl acrylate polymer is prepared by adding acrylonitrile and butyl acrylate at a ratio of 6 : 4, and other parameters are kept the same as those in Example 45. The specific parameters are shown in Table 1.

In Examples 49-51, lithium nickel cobalt manganese oxide (NCM) is used as the positive electrode active material, and acrylonitrile and isooctyl acrylate monomers are added and reacted at 55°C for 5 h to prepare a polymer as a binder, wherein the ratio of acrylonitrile to isooctyl acrylate added is 8 : 2, and the mass ratio of the binder to the conductive agent carbon nanotubes is 1.5 : 2, the mass ratio of the binder to the positive electrode active material is adjusted, and other steps are the same as those in Example 1. The specific parameters are shown in Table 1. In Examples 52-55, the mass ratio of the binder to the positive electrode active material is as 1. 6 : 100, the mass ratio of the binder to the conductive agent carbon nanotubes is adjusted, and other parameters are kept the same as those in Example 49. The specific parameters are shown in the table 1. In Examples 56-59, an acrylonitrile-butyl acrylate polymer is prepared at the adjusted ratio of acrylonitrile to butyl acrylate added, and other parameters are kept the same as those in Example 51. The specific parameters are shown in Table 1.

In Comparative Examples 1-2, lithium cobalt oxide (LCO) is used as the positive electrode active material, the mass ratio of the binder to the positive electrode active material is 1 : 100, and the mass ratio of the binder to the conductive agent carbon nanotubes is 1 : 2; in Comparative Example 5, the mass ratio of the binder to the positive electrode active material is 2 : 100, and the mass ratio of the binder to the conductive agent carbon nanotubes is 1 : 2, the binder in Comparative Examples 1 and 5 is polyvinylidene fluoride (PVDF), respectively, the binder in Comparative Example 2 is polyacrylonitrile polymer, the PVDF in Comparative Examples 1 and 5 is a commercially available raw material, purchased from Ruyuan Dongyangguang Fluorine Resin Co., Ltd., and has a weight average molecular weight of 700,000. The polyacrylonitrile polymer is prepared by the preparation method of preparing the binder in Example 1, with the difference that 410 mmol of acrylonitrile monomer is added and no other monomer is added to prepare a polyacrylonitrile.

In Comparative Examples 3-4, lithium nickel cobalt manganese oxide (NCM) is used as the positive electrode active material, the mass ratio of the binder to the positive electrode active material is 1.3 : 100, and the mass ratio of the binder to the conductive agent carbon nanotubes is 1.2 : 2; in Comparative Example 6, the mass ratio of the binder to the positive electrode active material is 1.2 : 100, and the mass ratio of the binder to the conductive agent carbon nanotubes is 1.5 : 2, the binder in Comparative Examples 3 and 6 is polyvinylidene fluoride; and the binder in Comparative Example 4 is a polyacrylonitrile polymer. The PVDF in Comparative Examples 3 and 6 is a commercially available raw material, purchased from Solvay Specialty Polymers Co., Ltd., and has a weight average molecular weight of 1,100,000. The polyacrylonitrile polymer in Comparative Example 4 is the same as that in Comparative Example 2.

The relevant parameters of the positive electrode materials of the above Examples 1-59 and Comparative Examples 1-6 are shown in Table 1 below. The prepared binder, electrode plate and battery are tested, and the methods are as follows:

### Method for testing performance of polymer

### 1. Test of types of structural units of polymer

The sample is subjected to KBr tabletting by means of a tabletting transmission method, and the blank of KBr background is subtracted by the transmission method to obtain the test spectrum of the sample, which was used to determine the structure and chemical bond of the molecule. The instrument model: Nicolet 5700 (Thermo Nicolet, USA), standard linearity: greater than 0.07%, resolution: 0.09 cm-1, wave number range: 400-4000 cm-1, sensitivity < 9.65*10-5Abls.

### 2. Test of molecular weight

A Waters 2695 Isocratic HPLC gel chromatograph (differential refractive index detector 2141) is used. A polystyrene solution sample with a mass fraction of 3.0% is used as a reference, and a matching chromatographic column (oily: Styragel HT5 DMF7.8*300 mm + Styragel HT4) is selected. A purified N-methylpyrrolidone (NMP) solvent is used to prepare a 3.0% binder solution, the prepared solution is allowed to stand for one day for later use. During the test, a syringe is used to suck tetrahydrofuran in first, then rinsed, and repeat the steps for several times. Then 5 ml of the test solution is sucked, the air is removed from the syringe, and the needle tip is wiped until dry. Finally, the sample solution is slowly injected into the injection port. The data is acquired after they are stable.

### 3. Test of viscosity of polymer

A rotational viscometer is used to measure the viscosity of the polymer. The prepared polymer is dissolved in N-methylpyrrolidone (NMP) solvent to prepare a solution with a solid content of 7%, a suitable rotor is selected and fixed, and the solution is placed under the rotor of the viscometer, so that the scale line of the rotor is just submerged by the slurry, and the data is read stably after stable. The instrument model: Shanghai Fangrui NDJ-5S, rotor: 63# (2000-10000 mPa.s), 64# (10000-50000 mPa.s), rotational speed: 12 r/min, test temperature: 25°C, test time: 5 min.

### Method for testing performance of electrode plate and battery

### 4. Test of binding force

The test process of binding force of the Examples and Comparative Examples of the present application is as follows:
A sample with a width of 30 mm*a length of 150 mm is cut with a blade, and a special double-sided adhesive tape with a width of 20 mm*a length of 80 mm is attached to a steel plate. The cut-out sample of electrode plate is attached to the double-sided adhesive tape with a test side facing down, then rolled three times in the same direction by a rolling roller with a weight of 2 kg. A paper tape with the same width as the electrode plate and a width longer than that of the sample of 80-200 mm is inserted under the electrode plate, and fixed with crepe glue. The power supply of the SASTest tensile machine (sensitivity is 1 N) is turned on, and the indicator light is on, the limit block is adjusted to an appropriate position, and the end of the steel plate without the electrode plate attached thereon is fixed by the lower fixture. The paper tape is folded upwards and fixed with the upper fixture, the position of the upper fixture is adjusted by using the "UP" and "DOWN" buttons on the accompanying manual controller, the sample is pre-stretched by 10 mm with the speed of the tensile machine of 50 mm/min, before formally testing and reading the value.

### 5. Test of resistance of electrode plate

The dried positive electrode slurry (diaphragm) is cut at the left, middle and right sites of the positive electrode plate into small discs with a diameter of 3 mm. The power supply of the IEST electrode plate resistance meter is turned on, the disc is placed in the appropriate position of the "probe" of the resistance meter, the "Start" button is clicked, and read it when the indicated number is stable. Each small disc is tested at two positions, and finally the average value of six measurements is calculated, which is the resistance of the electrode plate.

### 6. Test of the capacity retention rate of the battery

For the LCO system: taking Example 1 as an example, the test process of the battery capacity retention rate is as follows: at 25°C, the battery corresponding to Example 1 was charged to 4.4 V at a constant current of 1/3 C, then charged to a current of 0.05 C at a constant voltage of 4.4 V, allowed for standing for 5 min, and then discharged to 2.5 V at current of 1/3 C, the obtained capacity being recorded as the initial capacity C₀. The above steps were repeated for the same battery above and the discharge capacity Cn of the battery after the nₜₕ cycle was also recorded. The capacity retention rate Pn of the battery after each cycle was calculated as Pn = Cₙ/C₀ * 100%.

During this test, the first cycle corresponds to n = 1, the second cycle corresponds to n = 2, ...and the 100ₜₕ cycle corresponds to n = 100. The capacity retention rate data of batteries corresponding to Example 1 in Table 1 are the data obtained after 100 cycles under the test conditions above, namely, the value of P100. The test processes in the Comparative Example 1 and other examples are the same as those described above.

For NCM system: taking Example 31 as an example, the test process of the battery capacity retention rate is as follows: at 25°C, the battery corresponding to Example 1 was charged to 4.25 V at a constant current of 1/3 C, then charged to a current of 0.05 C at a constant voltage of 4.25 V, allowed for standing for 5 min, and then discharged to 2.8 V at current of 1/3 C, the obtained capacity being recorded as the initial capacity C₀. Other steps are kept the same as those for the LCO system.

### 7. Test of direct current resistance of battery

Taking Example 1 as an example, the test process of the direct current impedance of the battery is as follows: at 25°C, the battery corresponding to Examples 1 was charged to 4.3 V at a constant current of 1/3 C, then charged to a current of 0.05 C at a constant voltage of 4.3 V, and allowed for standing for 5 min, and the voltage at this time was recorded as V1. Then the batteries was discharged at 1/3 C for 30 s, the the voltage at this time is recorded as V2. The direct current resistance DCR1 of the battery after the first cycle was calculated as (V2 - V1)/1/3 C. The above steps are repeated for the same battery above, and the internal resistance DCRn (n = 1, 2, 3... 100) of the battery after the nth cycle is recorded at the same time, and a corresponding spectrum is obtained with the 100 point values, i.e. the above DCR1, DCR2, DCR3...DCR100, as the ordinate and the corresponding cycle numbers as the abscissa.

During this test, the first cycle corresponds to n = 1, the second cycle corresponds to n = 2, ...and the 100ₜₕ cycle corresponds to n = 100. The increase ratio of the internal resistance of the battery of Example 1 in Table 1 is equal to (DCRn - DCR1)/DCR1 * 100%, and the test process in the Comparative Example 1 and other examples are the same as those described above. The data in Table 1 is the data measured after 100 cycles under the above test conditions.

### Test Results

The test results for the performance of the prepared polymer, electrode plate and battery are shown in Table 1.

**Table 1 Parameters and test results of Examples 1-59 and Comparative examples 1-6**

| No. | Positi ve electr ode active mater ial | Monome r added in the preparati on of polymer | Poly mer I: II mola r ratio | Reactio n temper ature in the prepara tion of polyme r (°C) | Reacti on time in the prepara tion of polyme r (h) | Composi tion of polymer (I-II) | Visco sity (mPa· s) | Molec ular weight of polym er (* 10⁵) | Mass of binde r: Mass of positi ve electr ode active mater ial | Mass of binder: Mass of conduc tive agent | Bindi ng force of electr ode plate (N) | resista nce of electr ode plate (Q) | Cycli ng capac ity retent ion rate (%) | Increa se ratio of intern al resista nce of batter y (%) |
|---|---|---|---|---|---|---|---|---|---|---|---|---|---|---|
| Exam ple 1 | LCO | Acryloni trile, methyl acrylate | 8:2 | 40 | 3 | Acryloni trile, methyl acrylate polymer | 4800 | 70 | 0.5 : 100 | 1 : 2 | 4 | 1.24 | 85 | 140 |
| Exam ple 2 | LCO | Acryloni trile, methyl acrylate | 8:2 | 40 | 3 | Acryloni trile, methyl acrylate polymer | 4800 | 70 | 1.0 : 100 | 1 :2 | 7.5 | 0.65 | 92 | 121 |
| Exam ple 3 | LCO | Acryloni trile, methyl acrylate | 8:2 | 40 | 3 | Acryloni trile, methyl acrylate polymer | 4800 | 70 | 1.5 : 100 | 1 : 2 | 12 | 0.42 | 98 | 110 |
| Exam ple 4 | LCO | Acryloni trile, methyl acrylate | 8:2 | 40 | 3 | Acryloni trile, methyl acrylate polymer | 4800 | 70 | 2.0 : 100 | 1 : 2 | 15.5 | 0.74 | 93 | 120 |
| Exam ple 5 | LCO | Acryloni trile, methyl acrylate | 8:2 | 40 | 3 | Acryloni trile, methyl acrylate polymer | 4800 | 70 | 1.3 : 100 | 0.4:2 | 12 | 1.5 | 84 | 145 |
| Exam ple 6 | LCO | Acryloni trile, methyl acrylate | 8:2 | 40 | 3 | Acryloni trile, methyl acrylate polymer | 4800 | 70 | 1.3 : 100 | 0.6: 2 | 12.3 | 0.9 | 95 | 132.4 |
| Exam ple 7 | LCO | Acryloni trile, methyl acrylate | 8:2 | 40 | 3 | Acryloni trile, methyl acrylate polymer | 4800 | 70 | 1.3 : 100 | 0.8 : 2 | 11.9 | 0.7 | 97.5 | 113.5 |
| Exam ple 8 | LCO | Acryloni trile, methyl acrylate | 8:2 | 40 | 3 | Acryloni trile, methyl acrylate polymer | 4800 | 70 | 1.3 : 100 | 1.2 : 2 | 12 | 0.63 | 97.9 | 112.1 |
| Exam ple 9 | LCO | Acryloni trile, methyl acrylate | 6:4 | 40 | 3 | Acryloni trile, methyl acrylate polymer | 4500 | 70 | 2.0 : 100 | 1 : 2 | 14.5 | 0.75 | 92.5 | 125 |
| Exam ple 10 | LCO | Acryloni trile, methyl acrylate | 5 : 5 | 40 | 3 | Acryloni trile, methyl acrylate polymer | 4300 | 70 | 2.0 : 100 | 1 : 2 | 13.6 | 0.756 | 89.1 | 139.1 |
| Exam ple 11 | LCO | Acryloni trile, methyl acrylate | 9 : 1 | 40 | 3 | Acryloni trile, methyl acrylate polymer | 5000 | 70 | 2.0 : 100 | 1 : 2 | 18.5 | 1.03 | 88.6 | 137.8 |
| Exam ple 12 | LCO | Acryloni trile, methyl acrylate | 7 : 3 | 40 | 3 | Acryloni trile, methyl acrylate polymer | 4400 | 70 | 2.0 : 100 | 1 2 | 15 | 0.729 | 92.5 | 124.9 |
| Exam ple 13 | LCO | Acryloni trile, butyl acrylate | 8:2 | 50 | 3 | Acryloni trile, butyl acrylate polymer | 5500 | 80 | 0.3 : 100 | 1 :2 | 3.5 | 1.35 | 83 | 144 |
| Exam ple 14 | LCO | Acryloni trile, butyl acrylate | 8:2 | 50 | 3 | Acryloni trile, butyl acrylate polymer | 5500 | 80 | 1.0 : 100 | 1 : 2 | 11.3 | 0.55 | 98.5 | 107 |
| Exam ple 15 | LCO | Acryloni trile, butyl acrylate | 8:2 | 50 | 3 | Acryloni trile, butyl acrylate polymer | 5500 | 80 | 1.7 : 100 | 1 : 2 | 18.7 | 0.98 | 97.1 | 113 |
| Exam ple 16 | LCO | Acryloni trile, butyl acrylate | 8:2 | 50 | 3 | Acryloni trile, butyl acrylate polymer | 5500 | 80 | 2.4 : 100 | 1 : 2 | 25 | 1.55 | 95.3 | 118 |
| Exam ple 17 | LCO | Acryloni trile, butyl acrylate | 8:2 | 50 | 3 | Acryloni trile, butyl acrylate polymer | 5500 | 80 | 1.3 : 100 | 0.4:2 | 14.1 | 1.39 | 87.1 | 134.3 |
| | | | | | | | | | | | | | | |

| No. | Positi ve electr ode active mater ial | Monome r added in the preparati on of polymer | Poly mer I: II mola r ratio | Reactio n temper ature in the prepara tion of polyme r (°C) | Reacti on time in the prepara tion of polyme r (h) | Composi tion of polymer (I-II) | Visco sity (mPa· s) | Molec ular weight of polym er (* 10⁵) | Mass of binde r: Mass of positi ve electr ode active mater ial | Mass of binder: Mass of conduc tive agent | Bindi ng force of electr ode plate (N) | resista nce of electr ode plate (Q) | Cycli ng capac ity retent ion rate (%) | Increa se ratio of intern al resista nce of batter y (%) |
|---|---|---|---|---|---|---|---|---|---|---|---|---|---|---|
| Exam ple 18 | LCO | Acryloni trile, butyl acrylate | 8:2 | 50 | 3 | Acryloni trile, butyl acrylate polymer | 5500 | 80 | 1.3 : 100 | 0.6: 2 | 13.9 | 0.88 | 96.2 | 119.4 |
| Exam ple 19 | LCO | Acryloni trile, butyl acrylate | 8:2 | 50 | 3 | Acryloni trile, butyl acrylate polymer | 5500 | 80 | 1.3 : 100 | 0.8 : 2 | 14 | 0.61 | 98.4 | 109.3 |
| Exam ple 20 | LCO | Acryloni trile, butyl acrylate | 8:2 | 50 | 3 | Acryloni trile, butyl acrylate polymer | 5500 | 80 | 1.3 : 100 | 1.2 : 2 | 13.9 | 0.67 | 98.2 | 111.7 |
| Exam ple 21 | LCO | Acryloni trile, butyl acrylate | 6:4 | 50 | 3 | Acryloni trile, butyl acrylate polymer | 5100 | 80 | 1.0 : 100 | 1 : 2 | 13.3 | 0.73 | 96.9 | 115 |
| Exam ple 22 | LCO | Acryloni trile, isooctyl acrylate | 8:2 | 50 | 3.5 | Acryloni trile, isooctyl acrylate polymer | 6500 | 90 | 0.25 : 100 | 1 : 2 | 8.1 | 1.93 | 90.1 | 135 |
| Exam ple 23 | LCO | Acryloni trile, isooctyl acrylate | 8:2 | 50 | 3.5 | Acryloni trile, isooctyl acrylate polymer | 6500 | 90 | 0.8 : 100 | 1 : 2 | 13.3 | 0.54 | 98.2 | 112 |
| Exam ple 24 | LCO | Acryloni trile, isooctyl acrylate | 8:2 | 50 | 3.5 | Acryloni trile, isooctyl acrylate polymer | 6500 | 90 | 1.3 : 100 | 1 : 2 | 19.7 | 0.88 | 96.9 | 122 |
| Exam ple 25 | LCO | Acryloni trile, isooctyl acrylate | 8:2 | 50 | 3.5 | Acryloni trile, isooctyl acrylate polymer | 6500 | 90 | 1.95 : 100 | 1 : 2 | 28.2 | 1.46 | 95.7 | 127 |
| Exam ple 26 | LCO | Acryloni trile, isooctyl acrylate | 8:2 | 50 | 3.5 | Acryloni trile, isooctyl acrylate polymer | 6500 | 90 | 1.3 : 100 | 0.4:2 | 19.5 | 1.31 | 89.1 | 130.3 |
| Exam ple 27 | LCO | Acryloni trile, isooctyl acrylate | 8:2 | 50 | 3.5 | Acryloni trile, isooctyl acrylate polymer | 6500 | 90 | 1.3 : 100 | 0.6: 2 | 20.2 | 0.56 | 96.4 | 115.4 |
| | | | | | | | | | | | | | | |

| No. | Positi ve electr ode active mater ial | Monome r added in the preparati on of polymer | Poly mer I: II mola r ratio | Reactio n temper ature in the prepara tion of polyme r (°C) | Reacti on time in the prepara tion of polyme r (h) | Composi tion of polymer (I-II) | Visco sity (mPa· s) | Molec ular weight of polym er (*10⁵) | Mass of binde r: Mass of positi ve electr ode active mater ial | Mass of binder: Mass of conduc tive agent | Bindi ng force of electr ode plate (N) | resista nce of electr ode plate (Q) | Cycli ng capac ity retent ion rate (%) | Increa se ratio of intern al resista nce of batter y (%) |
|---|---|---|---|---|---|---|---|---|---|---|---|---|---|---|
| Exam ple 28 | LCO | Acryloni trile, isooctyl acrylate | 8:2 | 50 | 3.5 | Acryloni trile, isooctyl acrylate polymer | 6500 | 90 | 1.3 : 100 | 0.8 : 2 | 19.8 | 0.67 | 98.7 | 107.3 |
| Exam ple 29 | LCO | Acryloni trile, isooctyl acrylate | 8:2 | 50 | 3.5 | Acryloni trile, isooctyl acrylate polymer | 6500 | 90 | 1.3 : 100 | 1.2 : 2 | 12 | 0.78 | 98.3 | 109.7 |
| Exam ple 30 | LCO | Acryloni trile, isooctyl acrylate | 6 : 4 | 50 | 3.5 | Acryloni trile, isooctyl acrylate polymer | 6500 | 90 | 1.95 : 100 | 1 : 2 | 30.4 | 1.66 | 94.2 | 129 |
| Exam ple 31 | NCM | Acryloni trile, methyl acrylate | 8:2 | 45 | 4 | Acryloni trile, methyl acrylate polymer | 4900 | 80 | 1.0 : 100 | 1.5 : 2 | 10.2 | 1.34 | 92.3 | 128 |
| Exam ple 32 | NCM | Acryloni trile, methyl acrylate | 8:2 | 45 | 4 | Acryloni trile, methyl acrylate polymer | 4900 | 80 | 1.5 : 100 | 1.5 : 2 | 16.6 | 0.55 | 97.6 | 113 |
| Exam ple 33 | NCM | Acryloni trile, methyl acrylate | 8:2 | 45 | 4 | Acryloni trile, methyl acrylate polymer | 4900 | 80 | 2.0 : 100 | 1.5 : 2 | 23 | 0.42 | 98.3 | 106 |
| Exam ple 34 | NCM | Acryloni trile, methyl acrylate | 8:2 | 45 | 4 | Acryloni trile, methyl acrylate polymer | 4900 | 80 | 2.5 : 100 | 1.5 : 2 | 28.5 | 0.75 | 96.8 | 120 |
| Exam ple 35 | NCM | Acryloni trile, methyl acrylate | 8:2 | 45 | 4 | Acryloni trile, methyl acrylate polymer | 4900 | 80 | 1.6 : 100 | 1.2 : 2 | 21 | 1.47 | 94 | 125 |
| Exam ple 36 | NCM | Acryloni trile, methyl acrylate | 8:2 | 45 | 4 | Acryloni trile, methyl acrylate polymer | 4900 | 80 | 1.6 : 100 | 1.5 : 2 | 18.9 | 0.9 | 97.7 | 114.4 |
| Exam ple 37 | NCM | Acryloni trile, methyl acrylate | 8:2 | 45 | 4 | Acryloni trile, methyl acrylate polymer | 4900 | 80 | 1.6 : 100 | 1.8 : 2 | 17.8 | 0.7 | 97.5 | 112.7 |
| | | | | | | | | | | | | | | |

| No. | Positi ve electr ode active mater ial | Monome r added in the preparati on of polymer | Poly mer I: II mola r ratio | Reactio n temper ature in the prepara tion of polyme r (°C) | Reacti on time in the prepara tion of polyme r (h) | Composi tion of polymer (I-II) | Visco sity (mPa· s) | Molec ular weight of polym er (* 10⁵) | Mass of binde r: Mass of positi ve electr ode active mater ial | Mass of binder: Mass of conduc tive agent | Bindi ng force of electr ode plate (N) | resista nce of electr ode plate (Q) | Cycli ng capac ity retent ion rate (%) | Increa se ratio of intern al resista nce of batter y (%) |
|---|---|---|---|---|---|---|---|---|---|---|---|---|---|---|
| Exam ple 38 | NCM | Acryloni trile, methyl acrylate | 8:2 | 45 | 4 | Acryloni trile, methyl acrylate polymer | 4900 | 80 | 1.6 : 100 | 2.1 : 2 | 18 | 0.63 | 97.9 | 111.1 |
| Exam ple 39 | NCM | Acryloni trile, methyl acrylate | 6:4 | 45 | 4 | Acryloni trile, methyl acrylate polymer | 5300 | 80 | 1.6 : 100 | 1.2 : 2 | 20.3 | 1.67 | 92.1 | 126.1 |
| Exam ple 40 | NCM | Acryloni trile, butyl acrylate | 8:2 | 55 | 4.5 | Acryloni trile, butyl acrylate polymer | 6300 | 90 | 0.6 : 100 | 1.5 : 2 | 6.9 | 1.93 | 90.1 | 135 |
| Exam ple 41 | NCM | Acryloni trile, butyl acrylate | 8:2 | 55 | 4.5 | Acryloni trile, butyl acrylate polymer | 6300 | 90 | 1.2 : 100 | 1.5 : 2 | 14.4 | 0.85 | 98.2 | 111.6 |
| Exam ple 42 | NCM | Acryloni trile, butyl acrylate | 8:2 | 55 | 4.5 | Acryloni trile, butyl acrylate polymer | 6300 | 90 | 1.8 : 100 | 1.5 : 2 | 19.5 | 0.88 | 96.9 | 122.3 |
| Exam ple 43 | NCM | Acryloni trile, butyl acrylate | 8:2 | 55 | 4.5 | Acryloni trile, butyl acrylate polymer | 6300 | 90 | 2.4 : 100 | 1.5 : 2 | 30.7 | 1.46 | 95.7 | 127 |
| Exam ple 44 | NCM | Acryloni trile, butyl acrylate | 8:2 | 55 | 4.5 | Acryloni trile, butyl acrylate polymer | 6300 | 90 | 1.6 : 100 | 1.2 : 2 | 30.5 | 1.39 | 93.1 | 124.3 |
| Exam ple 45 | NCM | Acryloni trile, butyl acrylate | 8:2 | 55 | 4.5 | Acryloni trile, butyl acrylate polymer | 6300 | 90 | 1.6 : 100 | 1.5 : 2 | 30.3 | 0.88 | 97.7 | 119.4 |
| Exam ple 46 | NCM | Acryloni trile, butyl acrylate | 8:2 | 55 | 4.5 | Acryloni trile, butyl acrylate polymer | 6300 | 90 | 1.6 : 100 | 1.8 : 2 | 31.2 | 0.41 | 98.4 | 106.3 |
| Exam ple 47 | NCM | Acryloni trile, butyl acrylate | 8:2 | 55 | 4.5 | Acryloni trile, butyl acrylate polymer | 6300 | 90 | 1.6 : 100 | 2.1 : 2 | 30.6 | 0.67 | 98.1 | 119.7 |
| Exam ple 48 | NCM | Acryloni trile, butyl acrylate | 6 : 4 | 55 | 4.5 | Acryloni trile, butyl acrylate polymer | 6300 | 90 | 1.6 : 100 | 1.5 : 2 | 34.1 | 0.94 | 97.5 | 123.3 |
| Exam ple 49 | NCM | Acryloni trile, isooctyl acrylate | 8:2 | 55 | 5 | Acryloni trile, isooctyl acrylate polymer | 7000 | 100 | 0.4 : 100 | 1.5 : 2 | 6.9 | 1.93 | 90.1 | 135 |
| Exam ple 50 | NCM | Acryloni trile, isooctyl acrylate | 8:2 | 55 | 5 | Acryloni trile, isooctyl acrylate polymer | 7000 | 100 | 0.8 : 100 | 1.5 : 2 | 14.4 | 0.54 | 98.2 | 111.6 |
| Exam ple 51 | NCM | Acryloni trile, isooctyl acrylate | 8:2 | 55 | 5 | Acryloni trile, isooctyl acrylate polymer | 7000 | 100 | 1.2 : 100 | 1.5 : 2 | 19.5 | 0.88 | 96.9 | 122.3 |
| Exam ple 52 | NCM | Acryloni trile, isooctyl acrylate | 8:2 | 55 | 5 | Acryloni trile, isooctyl acrylate polymer | 7000 | 100 | 1.6 : 100 | 1.2 : 2 | 30.5 | 1.11 | 93.1 | 121.3 |
| Exam ple 53 | NCM | Acryloni trile, isooctyl acrylate | 8:2 | 55 | 5 | Acryloni trile, isooctyl acrylate polymer | 7000 | 100 | 1.6 : 100 | 1.5 : 2 | 30.3 | 0.56 | 98.7 | 104.4 |
| Exam ple 54 | NCM | Acryloni trile, isooctyl acrylate | 8:2 | 55 | 5 | Acryloni trile, isooctyl acrylate polymer | 7000 | 100 | 1.6 : 100 | 1.8 : 2 | 31.2 | 0.67 | 98.4 | 107.3 |
| Exam ple 55 | NCM | Acryloni trile, isooctyl acrylate | 8:2 | 55 | 5 | Acryloni trile, isooctyl acrylate polymer | 7000 | 100 | 1.6 : 100 | 2.1 : 2 | 30.6 | 0.78 | 98.1 | 109.7 |
| Exam ple 56 | NCM | Acryloni trile, isooctyl acrylate | 6:4 | 55 | 5 | Acryloni trile, isooctyl acrylate polymer | 6400 | 100 | 1.2 : 100 | 1.5 : 2 | 15.3 | 1.13 | 93.2 | 137 |
| Exam ple 57 | NCM | Acryloni trile, isooctyl acrylate | 5 : 5 | 55 | 5 | Acryloni trile, isooctyl acrylate polymer | 6200 | 100 | 1.2 : 100 | 1.5 : 2 | 12 | 0.82 | 91.1 | 141.4 |
| Exampl e 58 | NCM | Acrylon itrile, isooctyl acrylate | 9 : 1 | 55 | 5 | Acrylonitr ile, isooctyl acrylate polymer | 7300 | 100 | 1.2 : 100 | 1.5 : 2 | 22 | 1.23 | 91.4 | 140.3 |
| Exampl e 59 | NCM | Acrylon itrile, isooctyl acrylate | 7 : 3 | 55 | 5 | Acrylonitr ile, isooctyl acrylate polymer | 6800 | 100 | 1.2 : 100 | 1.5 : 2 | 17.2 | 1.15 | 95.7 | 123.6 |
| Compar ative Exampl e 1 | LCO | | | | | Polyvinyli dene fluoride | 4000 | 70 | 1.3 : 100 | 0.8 : 2 | 10.7 | 1.77 | 90.1 | 138.9 |
| Compar ative exampl e 2 | LCO | | | | | Polyacryl onitrile | 6000 | 80 | 1.3 : 100 | 0.8 : 2 | 12.4 | 1.75 | 90.2 | 134.3 |
| Compar ative Exampl e3 | NCM | | | | | Polyvinyli dene fluoride | 2500 | 110 | 1.6 : 100 | 1.2 : 2 | 18.2 | 1.5 | 92.4 | 137.2 |
| Compar ative Exampl e 4 | NCM | | | | | Polyacryl onitrile | 6000 | 80 | 1.6 : 100 | 1.2 : 2 | 23.4 | 1.8 | 92.1 | 139.2 |
| Compar ative Exampl e 5 | LCO | | | | | Polyvinyli dene fluoride | 4000 | 70 | 2.0 : 100 | 1 : 2 | 14.5 | 1.11 | 19.4 | 129.5 |
| Compar ative Exampl e 6 | NCM | | | | | Polyvinyli dene fluoride | 2500 | 110 | 1.2 : 100 | 1.5 : 2 | 15.2 | 1.27 | 92.8 | 139.9 |

According to the above results, it can be seen that the binders in Examples 1-59 all comprise polymers, and the polymers all comprise structural units derived from acrylonitrile and structural units derived from acrylate. From the comparison among Example 7, Example 19, Example 28 and Comparative Example 1 and Comparative Example 2 as well as the comparison among Example 35, Example 44, Example 52 and Comparative Example 3 and Comparative Example 4, it can be seen that compared with the electrode plate with PVDF or polyacrylonitrile polymer as the binder, the electrode plate with the above polymer as the binder has an improved binding force and a reduced resistance, thus improving the cycling capacity retention rate of the battery and decreasing the increase ratio of the internal resistance of the battery during cycling.

From the comparison among Example 4, Examples 9-12 and Comparative Example 5, as well as the comparison among Example 53, Examples 56-59 and Comparative Example 6,it can be seen that when the molar content of the structural units derived from acrylonitrile in the polymer is 60%-80% and the molar content of the structural units derived from acrylate is 20%-40% based on the total number of moles of all structural units in the polymer, and the polymer with respect to the PVDF binder enables the electrode plate to have a stronger binding force and a lower resistance, so that the battery has a higher cycling capacity retention rate and a lower increase ratio of the internal resistance of battery. Although when the molar ratio of the structural units derived from acrylonitrile and the structural units derived from acrylate in the polymer is 1 : 1, the electrode plate has a lower resistance, but the swelling of the binder is large during cycling, which leads to poor stability of the binder and decrease the capacity retention rate and resistance of the battery during cycling.

From Examples 1-59, it can be seen that when the polymer has a weight average molecular weight of 700,000-1,000,000, the polymer enables the electrode plate to have a stronger binding force and a lower resistance, so that the battery has a higher cycling capacity retention rate and a lower increase ratio of the internal resistance of the battery.

From Examples 1-59, it can be seen that the polymer is prepared as a solution with a solid content of 7% in N-methylpyrrolidone (NMP) solvent, and the viscosity of the solution is 4500-7500 mPa·s when measured at 25°C, the polymer enables the electrode plate to have a stronger binding force and a lower resistance, so that the battery has a higher cycling capacity retention rate and a lower increase ratio of the internal resistance of the battery.

When the mass ratio of the acrylonitrile-methyl acrylate polymer to the positive electrode active material in the electrode plate is 1.3 : 100-2.0 : 100, and the mass ratio of the acrylonitrile-methyl acrylate polymer to the conductive agent is 0.1 : 2-1 : 2, the polymer makes the binding force of the electrode plate be higher than 10 N, the resistance of the electrode plate be lower than 1.8 Ω, the cycling capacity retention rate of battery be higher than 90%, and the increase ratio of the internal resistance of battery be lower than 130%.

When the mass ratio of the acrylonitrile-butyl acrylate polymer to the positive electrode active material in the electrode plate is 1.0 : 100-2.4 : 100, and the mass ratio of the acrylonitrile-methyl acrylate polymer to the conductive agent is 0.6 : 2-2.1 : 2, the polymer makes the binding force of the electrode plate be higher than 10 N, the resistance of the electrode plate be lower than 1.6 Ω, the cycling capacity retention rate of battery be higher than 88%, and the increase ratio of the internal resistance of battery be lower than 130%.

When the mass ratio of the acrylonitrile-isooctyl acrylate polymer to the positive electrode active material in the electrode plate is 0.8 : 100-2.4 : 100, and the mass ratio of the acrylonitrile-methyl acrylate polymer to the conductive agent is 0.6 : 2-1.9 : 2, the polymer makes the binding force of the electrode plate be higher than 10 N, the resistance of the electrode plate be lower than 1.5 Ω, the cycling capacity retention rate of battery be higher than 90%, and the increase ratio of the internal resistance of battery be lower than 130%.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that may be conceived by those skilled in the art to the embodiments, and other modes constructed by combining some of the constituent elements of the embodiments also fall within the scope of the present application.

## Claims

1. A binder, comprising a polymer comprising structural units derived from a monomer represented by formula I and structural units derived from a monomer represented by formula II, 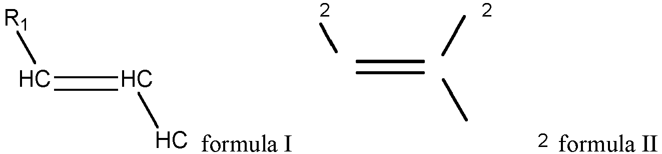 wherein R₁ and R₂ are each independently selected from hydrogen or substituted or unsubstituted C₁₋₅ alkyl, R₃ is selected from hydrogen or methyl, and R₄ is selected from substituted or unsubstituted C₁₋₉ alkyl.

2. The binder according to claim 1, wherein in the polymer, the molar content of the structural units derived from the monomer represented by formula I is 60%-80%, and the molar content of the structural units derived from the monomer represented by formula II is 20%-40%, based on the total number of moles of all structural units in the polymer.

3. The binder according to claim 1 or 2, wherein the polymer has a weight average molecular weight of 700,000 - 1,000,000.

4. The binder according to any one of claims 1-3, wherein the polymer is prepared as a solution with a solid content of 7% in N-methylpyrrolidone (NMP) solvent, and the viscosity of the solution is 4500-7500 mPa s when measured at 25°C.

5. The binder according to any one of claims 1-4, wherein the monomer represented by formula I is selected from one or more of acrylonitrile and butenenitrile.

6. The binder according to any one of claims 1-5, wherein the monomer represented by formula II is selected from one or more of methyl acrylate, ethyl acrylate, butyl acrylate, isopentyl acrylate, isooctyl acrylate, methyl methacrylate, ethyl methacrylate, hydroxyethyl acrylate, and hydroxypropyl acrylate, or from one or more of methyl acrylate, butyl acrylate, and isooctyl acrylate.

7. A method for preparing a binder, comprising the steps of:
providing a monomer represented by formula I and a monomer represented by formula II, 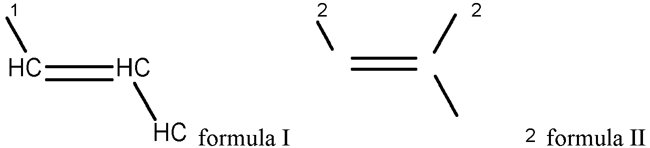
wherein R₁ and R₂ are each independently selected from hydrogen or substituted or unsubstituted C₁₋₅ alkyl, R₃ is selected from hydrogen or methyl, and R₄ is selected from substituted or unsubstituted C₁₋₉ alkyl;
polymerizing the monomer represented by formula I and the monomer represented by formula II under polymerizable conditions to prepare a polymer.

8. A positive electrode plate, comprising a positive electrode active material, a conductive agent, and a binder according to any one of claims 1-6 or a binder prepared by a preparation method according to claim 7.

9. The positive electrode plate according to claim 8, wherein the positive electrode active material is a lithium-containing transition metal oxide.

10. The positive electrode plate according to claim 8 or 9, wherein the mass ratio of the binder to the positive electrode active material is 0.01 : 100-6 : 100, or 0.2 : 100-3 : 100, or 0.8 : 100-2 : 100.

11. The positive electrode plate according to any one of claims 8-10, wherein the conductive agent is selected from one or more of conductive carbon black, conductive graphite, carbon nanotubes, graphene, and carbon fibers, or from one or more of conductive carbon black and carbon nanotubes.

12. The positive electrode plate according to any one of claims 8-11, wherein the mass ratio of the binder to the conductive agent is 0.1 : 2-3 : 2, or 0.2 : 2-2.8 : 2, or 0.5 : 2-2.5 : 2.

13. A secondary battery, comprising an electrode assembly and an electrolyte solution, wherein the electrode assembly comprising the positive electrode plate according to any one of claims 8-12, a separator, and a negative electrode plate.

14. A battery module, comprising the secondary battery according to claim 13.

15. A battery pack, comprising the battery module according to claim 14.

16. A power consuming device, comprising at least one selected from the secondary battery according to claim 13, the battery module according to claim 14, or the battery pack according to claim 15.
